# EUROPÄISCHE PATENTSCHRIFT

(11) **EP 0 808 774 B1**
(45) Veröffentlichungstag und Bekanntmachung des Hinweises auf die Patenterteilung: **31.03.2004**
(21) Anmeldenummer: 97106342.5
(22) Anmeldetag: 17.04.1997
(51) Int. Cl.: B65D 1/28, B29C 51/16, B31B 7/00, B32B 27/10

(54) **Verfahren und Vorrichtung zum Herstellen einer becherförmigen Verpackung**
Method and device for manufacturing a cup-shaped package
Procédé et dispositif de fabrication d'un emballage en forme de gobelet

(30) Priorität: 21.05.1996 DE 19620396
(43) Veröffentlichungstag der Anmeldung: 26.11.1997
(73) Patentinhaber: Huhtamaki Göttingen Zweigniederlassung der Huhtamaki Deutschland GmbH & Co. KG, 37077 Göttingen (DE)
(72) Erfinder: Günter, Walter, 37120 Bovenden (DE); Heere, Wolfgang, 37120 Bovenden (DE); Altenburg, Gerd, 37073 Göttingen (DE)
(74) Vertreter: Hutzelmann, Gerhard

(56) Entgegenhaltungen:
- EP-A- 0 432 569
- EP-A- 0 695 692
- DE-A- 2 331 005
- DE-U- 29 513 093
- US-A- 2 675 954
- US-A- 3 231 128
- US-A- 5 385 260

## Beschreibung

Die Erfindung bezieht sich auf ein Verfahren zum Herstellen einer becherförmigen Verpackung mit einem Innenteil aus tiefgezogenem Kunststoff, insbesondere Polypropylen, und einem Außenteil aus Karton, die miteinander verbunden sind, bei dem das Innenteil und das Außenteil getrennt voneinander hergestellt werden, wobei das Innenteil nach dem Tiefziehen aus der Tiefziehform entnommen und auf einer dornförmigen Aufnahme angeordnet wird, und auf eine Vorrichtung zum Herstellen einer becherförmige Verpackung.

Es sind zahlreiche Verfahren zum Herstellen einer derartigen Verpackung bekannt. Dabei wird in das aufgerichtete Außenteil ein Innenteil hinein tiefgezogen. Derartige Verfahren haben sich zwar bewährt, doch ist ihre Anwendung auf Kunststoffe beschränkt, die beim Abkühlen der tiefgezogenen Folie keinen großen Schrumpf aufweisen.

Diese Kunststoffe eignen sich entweder nur bedingt zum Einfüllen von Lebensmitteln oder sind entsprechend teuer.

Aus der DE-A-23 31 005 ist ein Verfahren zum Herstellen einer Verpackung bekannt, die aus einem dichten Innenbecher und einer Manschette gebildet wird, wobei zwischen beiden ein Abstand vorgesehen sein soll.

Die EP-A- 0 432 569 zeigt und beschreibt ein Verfahren zum Einbringen von Behältern in Formnester.

DE-U-295 13 093 behandelt einen Verpackungsbehälter, mit einem im Tiefziehverfahren hergestellten Kunststoffbecher und einer Kartonhülse, die lösbar ineinander gefügt sind.

Der Erfindung liegt die Aufgabe zugrunde, ein Verfahren aufzuzeigen, mit dem verhältnismäßig preisgünstiger Kunststoff für das Innenteil eingesetzt werden kann, der unbedenklich auch für Lebensmittel verwendet werden kann.

Diese Aufgabe wird gemäß der Erfindung dadurch gelöst, daß das aufgerichtete Außenteil in eine Negativform eingebract wird, welches wie die dornförmige Aufnahme mittels endloser Fördereinrichtungen so bewegbar ist, daß die Aufnahme in die Negativform eindringt, so daß das Innenteil und das Außenteil zusammengefügt und durch einen zuvor aufgebrachten Kleber miteinander verbunden werden.

Dadurch ist es möglich, auch stark schrumpfende Kunststoffe zu verwenden, da der Schrumpf nicht auf das Außenteil übertragen wird.

Die vorzugsweise eingesetzte Polypropylenfolie ist selbst bei fetthaltigen Lebensmitteln völlig unbedenklich und darüber hinaus äußerst preiswert. Der beim Abkühlen der tiefgezogenen Polypropylenfolie eintretende verhältnismäßig starke Schrumpf hat beim erfindungsgemäßen Verfahren keinen negativen Einfluß, da das Innenteil mit Übermaß hergestellt werden kann und erst nach dem Schrumpfen mit dem Außenteil verbunden wird.

Eine vorteilhafte Ausgestaltung des erfindungsgemäßen Verfahrens liegt darin, daß das Innenteil während des Transportes auf der domförmigen Aufnahme mit einem Kleber versehen wird.

Gemäß einer weiteren vorteilhaften Ausgestaltung der Erfindung ist vorgesehen, daß als Kleber ein wässriger Dispersionskleber verwendet wird.

Damit ist nach der Verwendung der Verpackung ein leichtes Trennen von Innen- und Außenteil möglich, so daß beide getrennt recycelt werden können.

Eine erfindungsgemäße Vorrichtung zum Herstellen einer becherförmigen Verpackung mit einem Innenteil aus tiefgezogenem Kunststoff, insbesondere Polypropylen, und einem Außenteil aus Karton, die miteinander verbunden sind, mit einer dornförmigen Aufnahme, auf der das aus der Tiefziehform entnommene Innenteil angeordnet ist, ist dadurch gekennzeichnet, daß die dornförmige Aufnahme mittels einer endlosen Fördereinrichtung bewegbar ist, daß zur Aufnahme des aufgerichteten Außenteils eine mit einer endlosen Fördereinrichtung bewegbare Negativform vorgesehen ist und daß die beiden endlosen Fördereinrichtungen auf einem Teil ihres Weges parallel zueinander verlaufen und dabei die Aufnahme in die Negativform einzudringen vermag, so daß das Innenteil und das Außenteil durch den von Beleimungseinrichtungen aufgetragenen Kleber fest miteinander verbindbar sind.

Mit einer derartigen Vorrichtung ist trotz der getrennten Herstellung der beiden Teile eine äußerst rationelle Fertigung der becherförmigen Verpackung gewährleistet

Eine weitere vorteilhafte Ausgestaltung der erfindungsgemäßen Vorrichtung ist dadurch gekennzeichnet, daß die Beleimstationen an der endlosen Fördereinrichtung vorgesehen sind, und daß die dornförmigen Aufnahmen für das Innenteil drehbar gelagert sind und zwischen zwei Beleimstationen eine Drehvorrichtung zum Drehen um wenigstens 90° vorgesehen ist.

Damit ist es möglich auf einfache Weise alle vier Seitenwände des Innenteils mit Kleber zu versehen, was wiederum eine sehr gute Verbindung von Innen- und Außenteil gewährleistet.

Als ebenfalls sehr vorteilhaft hat es sich erwiesen, wenn gemäß einer weiteren Ausgestaltung der Erfindung jeweils zwei der Beleimstationen auf unterschiedlichen Seiten des Endlosförderbandes angeordnet sind und wenn zwischen der zweiten und der dritten Beleimstation eine Drehvorrichtung zum Drehen des Innenteils um 90° angeordnet ist und wenn nach der vierten Beleimstation eine weitere Drehstation angeordnet ist, welche das Innenteil um 90° dreht.

Damit ist es möglich im Durchlaufverfahren alle vier Seitenwände des Innenteils mit Kleber zu beaufschlagen und trotzdem das Innenteil in der ursprünglichen Ausrichtung weiterzutransportieren.

Als sehr vorteilhaft hat es sich auch ergeben, wenn gemäß einer weiteren Ausgestaltung der Erfindung die Negativaufnahmen in der Höhe verfahrbar sind.

In der Zeichnung ist die Erfindung anhand eines Ausführungsbeispiels einer Vorrichtung und einer Verpackung veranschaulicht. Dabei zeigen:
- Fig. 1: eine Schnittdarstellung einer becherförmigen Verpackung und
- Fig.2: eine schematische Darstellung einer Vorrichtung zum Herstellen der becherförmigen Verpackung.

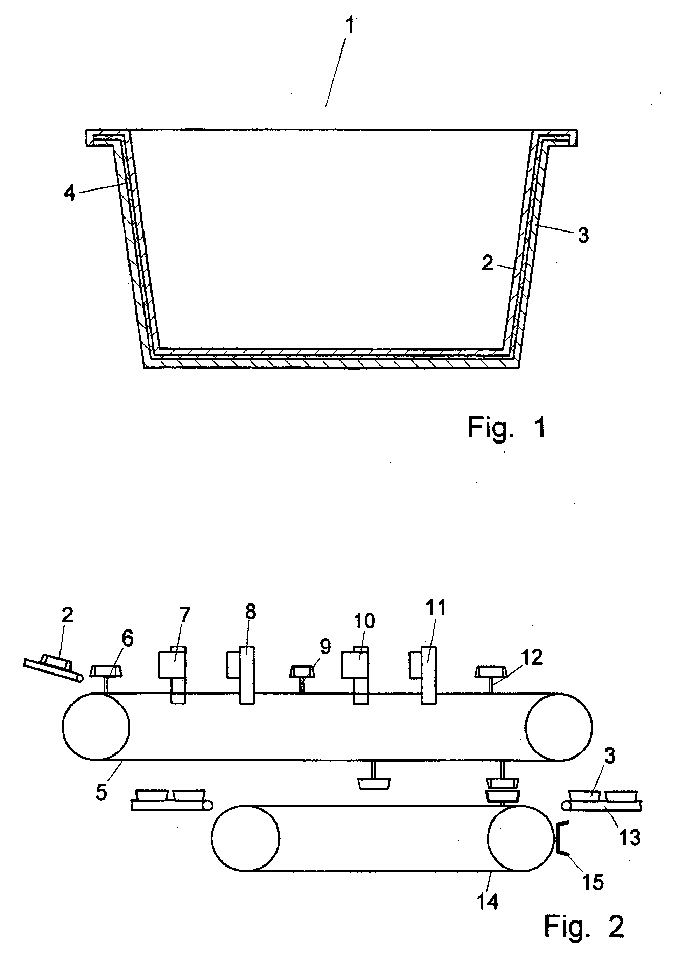

Mit 1 ist in Fig.1 eine becherförmige Verpackung bezeichnet, wie sie beispielsweise zum Verpacken von Margarine eingesetzt wird. Sie besteht aus einem Innenteil 2 aus tiefgezogener Polypropylen-Folie und einem Außenteil 3 aus Karton. Zwischen beiden ist ein wässriger Dispersionskleber 4 eingebracht, der Innen- und Außenteil fest miteinander verbindet.

Das Innenteil 2 wird in einer nicht dargestellten Tiefziehstation aus einer flachliegenden Polypropylenfolie tiefgezogen und aus dieser ausgestanzt. Es wird dann - wie in Fig.2 dargestellt - einem Endlosförderband 5 zugeführt, auf dem dornförmige Aufnahmen 6 angeordnet sind, welche in den Innenraum der Innenteile eingreifen. Auf beiden Seiten des Endlosförderbandes 5 sind je eine Beleimstation 7 und 8 angeordnet, die auf beiden Längs-Außenseiten des Innenteils den wässrigen Dispersionskleber 4 auftragen. Anschließend daran ist eine Drehstation 9 vorgesehen, in welcher die dornförmige Aufnahme und damit das Innenteil um 90° gedreht wird. Darauf folgen zwei weitere Beleimstationen 10 und 11, die wieder beiderseits des Endlosförderbandes 5 angeordnet sind und die beiden anderen Außenseiten des Innenteils mit Kleber beaufschlagen. Daran schließt eine weitere Drehstation 12 an, in welcher die dornförmige Aufnahme und das auf ihr sitzende Innenteil um 90° zurückoder weitergedreht wird, wodurch das Innenteil wieder in Längsrichtung ausgerichtet ist.

In einer ebenfalls nicht dargestellten Aufrichtstation werden gleichzeitig die Außenteile 3 aus einem flachliegenden Kartonzuschnitt aufgerichtet und über eine Transporteinrichtung 13 herangeführt.

Unterhalb des Endlosförderbandes 5 ist eine zweite endlos ausgebildete Fördereinrichtung 14 angeordnet, an der Negativaufnahmen 15 zur Aufnahme der Außenteile 3 angebracht sind. Diese Negativaufnahmen 15 laufen im oberen Abschnitt der Fördereinrichtung parallel zu den dornförmigen Aufnahmen 6 im unteren Abschnitt des Endlosförderbandes 5, so daß das Innenteil 2 und das Außenteil 3 übereinander zu liegen kommen. Die Negativaufnahmen 15 sind in der Höhe verstellbar gelagert, wodurch sie über die dornförmigen Aufnahmen verfahren werden können, wobei bei diesem Zusammenfahren das Innenteil und das Außenteil miteinander verbunden werden.

Nach dem Zusammenfügen kann der geringe Wasseranteil des Dispersionsklebers in den Karton eindringen, wodurch der Kleber aushärtet. Der Wasseranteil ist jedoch so gering, daß der Wassergehalt des Kartons nur geringfügig ansteigt.

## Patentansprüche

1. Verfahren zum Herstellen einer becherförmigen Verpackung(1) mit einem Innenteil(2) aus tiefgezogenem Kunststoff, insbesondere Polypropylen, und einem Außenteil(3) aus Karton, die miteinander verbunden sind, bei dem das Innenteil(2) und das Außenteil(3) getrennt voneinander hergestellt werden, wobei das Innenteil nach dem Tiefziehen aus der Tiefziehform entnommen und auf einer dornförmigen Aufnahme(6) angeordnet wird, **dadurch gekennzeichnet, daß** das aufgerichtete Außenteil(3) in eine Negativform(15) eingebracht wird, welches wie die dornförmige Aufnahme(6) mittels endloser Fördereinrichtungen(5,14) so bewegbar ist, daß die Aufnahme in die Negativform eindringt, so daß das Innenteil(2) und das Außenteil(3) zusammengefügt und durch einen zuvor aufgebrachten Kleber miteinander verbunden werden.

2. Verfahren nach Anspruch 1, **dadurch gekennzeichnet, daß** das Innenteil(2) während des Transportes auf der dornförmigen Aufnahme(6) mit einem Kleber versehen wird.

3. Verfahren nach Anspruch 2, **dadurch gekennzeichnet, daß** als Kleber ein wässriger Dispersionskleber verwendet wird.

4. Vorrichtung zum Herstellen einer becherförmigen Verpackung(1) mit einem Innenteil(2) aus tiefgezogenem Kunststoff, insbesondere Polypropylen, und einem Außenteil(3) aus Karton, die miteinander verbunden sind, mit einer dornförmigen Aufnahme(6), auf der das aus der Tiefziehform entnommene Innenteil(2) anordenbar ist, **dadurch gekennzeichnet, daß** die dornförmige Aufnahme(6) mittels einer endlosen Fördereinrichtung(5) bewegbar ist, daß zur Aufnahme des aufgerichteten Außenteils(3) eine mit einer endlosen Fördereinrichtung(14) bewegbare Negativform(15) vorgesehen ist und daß die beiden endlosen Fördereinrichtungen (5,14) auf einem Teil ihres Weges parallel zueinander verlaufen und dabei die Aufnahme in die Negativform einzudringen vermag so daß das Innenteil(2) und das Außenteil(3) durch den von Beleimeinrichtungen(7,8,10,11) aufgetragenen Kleber fest miteinander verbindbar sind.

5. Vorrichtung nach Anspruch 6, **dadurch gekennzeichnet, daß** die Beleimstationen(7,8,10,11) an der endlosen Fördereinrichtung(5) vorgesehen sind, und daß die dornförmigen Aufnahmen(6) für das Innenteil(2) drehbar gelagert sind und zwischen zwei Beleimstationen eine Drehvorrichtung(9) zum Drehen um wenigstens 90° vorgesehen ist.

6. Vorrichtung nach Anspruch 5, **dadurch gekennzeichnet, daß** jeweils zwei der Beleimstationen(7,8,10,11) auf unterschiedlichen Seiten des Endlosförderbandes(5) angeordnet sind, und daß zwischen der zweiten und dritten Beleimstation(8,10) eine Drehvorrichtung(9) zum Drehen des Innenteils um 90° angeordnet ist, und daß nach der vierten Beleimstation(11) eine weitere Drehstation(12) angeordnet ist, welche das Innenteil(2) um 90° dreht.

7. Vorrichtung nach einem der vorhergehenden Ansprüche, **dadurch gekennzeichnet, daß** die Negativaufnahmen(15) in der Höhe verfahrbar sind.

## Claims

1. Process for the production of a tub-like pack (1) with an inner section (2) made from thermoformed plastic, polypropylene in particular, and an outer section (3) made from board that are bonded together, in which the inner section (2) and the outer section (3) are produced separately from each other and the inner section is removed from the thermoforming mould after the thermoforming process and is placed on a mandrel-like support (6), **wherein** the erected outer section (3) is put in a negative die (15) that, like the mandrel-like support (6), can be moved by endless conveyors (5, 14) in such a way that the support enters the negative die (15), so that the inner section (2) and the outer section (3) are combined and bonded together with an adhesive that has been applied beforehand.

2. Process according to claim 1, **wherein** the inner section (2) is provided with an adhesive while it is being transported on the mandrel-like support (6).

3. Process according to claim 2, **wherein** an aqueous dispersion adhesive is used as the adhesive.

4. Apparatus for producing a tub-like pack (1) with an inner section (2) made from thermoformed plastic, polypropylene in particular, and an outer section (3) made from board that are bonded together and with a mandrel-like support (6) on which the inner section (2) can be placed after being removed from the thermoforming mould, **wherein** the mandrel-like support (6) can be moved by an endless conveyor (5), **wherein** a negative die (15) that can be moved by an endless conveyor (14) is provided to hold the outer section (3) after it has been erected and **wherein** the two endless conveyors (5, 14) run parallel to each other during part of their path and the support can enter the negative die (15) during this time, so that the inner section (2) and the outer section (3) can be bonded together securely with the adhesive applied by the gluing units (7, 8, 10, 11).

5. Apparatus according to claim 6, **wherein** the gluing stations (7, 8, 10, 11) are provided on the endless conveyor (5) and **wherein** the mandrel-like supports (6) for the inner section (2) are pivoted and a turning device (9) is provided between two gluing stations to complete a turn of at least 90°.

6. Apparatus according to claim 5, **wherein** pairs of the gluing stations (7, 8, 10, 11) are located on different sides of the endless conveyor (5) and **wherein** a turning device (9) for turning the inner section by 90° is located between the second and third gluing station (8, 10) and **wherein** a further turning station (12) that turns the inner section (2) by 90° is located after the fourth gluing station (11).

7. Apparatus according to one of the previous claims, **wherein** the height of the negative dies (15) can be varied.

## Revendications

1. Procédé de fabrication d'un emballage (1) en forme de gobelet comprenant une partie intérieure (2) en matière plastique emboutie, en particulier du polypropylène, et une partie extérieure (3) en carton, lesquelles sont assemblées l'une à l'autre, dans lequel procédé la partie intérieure (2) et la partie extérieure (3) sont fabriquées séparément, la partie intérieure étant retirée de l'outil ou matrice d'emboutissage après le processus d'emboutissage et étant posée sur un dispositif de réception (6) en forme de mandrin, **caractérisé en ce que** la partie extérieure (3) en position montée est posée dans une forme négative (15), laquelle partie extérieure, tout comme le dispositif de réception (6) en forme de mandrin, peut être déplacée au moyen de dispositifs de transport continus (5, 14), de telle sorte que le dispositif de réception pénètre dans la forme négative, de telle sorte que la partie intérieure (2) et la partie extérieure (3) sont jointes l'une à l'autre et sont assemblées entre elles au moyen d'une colle appliquée au préalable.

2. Procédé selon la revendication 1, **caractérisé en ce qu'**une colle est appliquée sur la partie intérieure (2) pendant le transport sur le dispositif de réception (6) en forme de mandrin.

3. Procédé selon la revendication 2, **caractérisé en ce que** la colle utilisée est une colle à dispersion aqueuse.

4. Dispositif de fabrication d'un emballage (1) en forme de gobelet comprenant une partie intérieure (2) en matière plastique emboutie, en particulier du polypropylène, et une partie extérieure (3) en carton, lesquelles sont assemblées l'une à l'autre, comprenant un dispositif de réception (6) en forme de mandrin, sur lequel on peut poser la partie intérieure (2) retirée hors de l'outil ou matrice d'emboutissage, **caractérisé en ce que** le dispositif de réception (6) en forme de mandrin peut être déplacé au moyen d'un dispositif de transport continu (5), **en ce que**, pour recevoir la partie extérieure (3) en position montée, il est prévu une forme négative (15) pouvant être déplacée par un dispositif de transport continu (14) et **en ce que** les deux dispositifs de transport continus (5, 14) défilent parallèlement l'un à l'autre sur une partie de leur trajet et le dispositif de réception est alors susceptible de pénétrer dans la forme négative, de telle sorte que la partie intérieure (2) et la partie extérieure (3) peuvent être solidement assemblées l'une à l'autre au moyen de la colle appliquée par les dispositifs d'encollage (7, 8, 10, 11).

5. Dispositif selon la revendication 4, **caractérisé en ce que** les postes d'encollage (7, 8, 10, 11) sont prévus sur le dispositif de transport continu (5) et **en ce que** les dispositifs de réception (6) en forme de mandrin, destinés à la partie intérieure (2), sont montés de manière rotative et un dispositif rotatif (9) destiné à entraîner en rotation sur au moins 90° est prévu entre deux postes d'encollage.

6. Dispositif selon la revendication 5, **caractérisé en ce que** respectivement deux des postes d'encollage (7, 8, 10, 11) sont agencés sur des côtés différents de la bande de transport continue (5) et **en ce qu'**un dispositif rotatif (9) destiné à entraîner en rotation la partie intérieure sur 90° est prévu entre le deuxième et le troisième poste d'encollage (8, 10), et **en ce que**, à la sortie du quatrième poste d'encollage (11), est prévu un autre dispositif rotatif (12), par lequel la partie intérieure (2) est entraînée en rotation sur 90°.

7. Dispositif selon l'une quelconque des revendications précédentes, **caractérisé en ce que** les formes négatives (15) peuvent être déplacées en hauteur.
